# EUROPÄISCHE PATENTSCHRIFT

(11) **EP 1 154 731 B1**
(45) Veröffentlichungstag und Bekanntmachung des Hinweises auf die Patenterteilung: **15.09.2004**
(21) Anmeldenummer: 00906339.7
(22) Anmeldetag: 17.02.2000
(51) Int. Cl.: A61C 15/04

(54) **REINIGUNGSELEMENT, INSBESONDERE ZUR REINIGUNG VON ZÄHNEN UND VERFAHREN ZU SEINER HERSTELLUNG**
CLEANING ELEMENT, ESPECIALLY FOR CLEANING TEETH AND A METHOD FOR PRODUCING THE SAME
ELEMENT DE NETTOYAGE, EN PARTICULIER POUR LE NETTOYAGE DES DENTS, ET SON PROCEDE DE PRODUCTION

(30) Priorität: 25.02.1999 DE 19908238
(43) Veröffentlichungstag der Anmeldung: 21.11.2001
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Lasch, Hartmut Dipl.-Ing.
(86) Internationale Anmeldenummer: PCT/EP2000/001295
(87) Internationale Veröffentlichungsnummer: WO 2000/049965

(56) Entgegenhaltungen:
- WO-A-98/06350
- US-A- 3 942 539
- US-A- 4 550 741
- US-A- 4 974 615
- US-A- 5 086 792
- US-A- 5 289 836
- US-A- 5 316 028
- US-A- 5 433 226
- US-A- 5 775 346

## Beschreibung

Die Erfindung betrifft ein Reinigungselement insbesondere zur Reinigung von Zähnen sowie ein Verfahren zur Herstellung eines entsprechenden Reinigungselementes.

Es ist wissenschaftlich belegt, daß die Reinigung der Interdentalräume für die Gesunderhaltung des Gebisses und insbesondere des Zahnhalteapparates von besonderer Bedeutung ist, da Zahnfleischerkrankungen und auch die Erkrankungen des Zahnhalteapparates, die sogenannte Paradontitis, in den meisten Fällen von den Interdentalräumen ausgehen. Als Ursache der Erkrankungen spielt dabei die mangelnde Reinigung der Interdentalräume eine entscheidende Rolle, wobei es bei fehlender Reinigung der Interdentalräume sogar zu Knochenauflösungsprozessen kommen kann. Es hat sich gezeigt, daß die Interdentalräume mit Hand- oder Elektrozahnbürsten nicht ausreichend gereinigt werden können, da nur etwa 3/5 aller Zahnflächen beim Putzen mit der Zahnbürste erreicht werden, so daß spezielle Reinigungsvorrichtungen verwendet werden müssen.

Zur Reinigung der Interdentalräume werden häufig Interdentalreiniger in Form von Interdentalbürsten oder Zahnstochern verwendet, wobei letztere insbesondere für die Reinigung des leicht öffnenden Interdentalraums zwischen Brückenankern und im Sulkusbereich Verwendung finden. Zahnstocher sind in unterschiedlichen Ausgestaltungen aus unterschiedlichen Materialien und mit unterschiedlichen Oberflächengestaltungen bekannt. Der wesentliche Nachteil eines Zahnstochers besteht darin, daß er die bombierten Flächen der Zähne im Interdentalbereich nur tangential bzw. punktuell streift und bearbeitet, so daß eine vollflächige Reinigung der Zähne nicht zu erzielen ist.

Neben den genannten Zahnstochern sind seit langer Zeit auch Reinigungsfäden, beispielsweise Zahnseide, in Verwendung, die in die Interdentalräume eingeführt und über die Oberfläche der Zähne gezogen werden. Obwohl es mit Zahnfäden möglich ist, auch die für Borsten unzugänglichen Stellen von Zahnbelag zu säubern und obwohl die Zahnfäden auch von Zahnmedizinern als beste Reinigungsmethode anerkannt sind, haben sie sich in der Bevölkerung noch nicht in ausreichendem Maße durchgesetzt. Das liegt zum einen daran, daß die Handhabung der Reinigungsfäden dem ungeübten Anwender kompliziert erscheint und daß es durch anfängliche Falschanwendung häufig zu schmerzhaften Verletzungen, beispielsweise einem Einschneiden des Zahnfadens in das Zahnfleisch kommt.

Zahnfäden bestehen üblicherweise aus einem fadenartigen Endlosträger, bei dem es sich um ein Monofil, ein Multifil, einen Zwirn oder ein Band etc. handeln kann. Der Endlosträger kann gewachst und gegebenenfalls fluoriert sein. Die meisten am Mark erhältlichen Zahnfäden sind darüber hinaus vollständig oder zumindest in Teilbereichen ihrer Länge beflockt, indem auf den Endlosträger eine Leimschicht aufgebracht ist, in die Feinstfasern oder -borsten eingebettet sind. Es hat sich jedoch gezeigt, daß die die Beflockung bildenden Polymerfasern nicht abriebsicher auf dem Endlosträger fixiert sind, so daß sie sich bei Gebrauch lösen können, was von dem Benutzer als ausgesprochen unangenehm empfunden wird. Es gibt darüber hinaus wissenschaftliche Untersuchungen, die sogar belegen, daß die abgelösten Fasern zu gesundheitlichen Schäden führen, wenn sie in den Körper des Menschen gelangen. Um diese Nachteile zu vermeiden, ist versucht worden, gleitende und nicht-fasernden Zahnfäden zu entwickeln. Wenn die Zahnfäden jedoch über die Zahnflächen gleiten, tritt keine Bürstwirkung auf, so daß ein nur geringer Reinigungseffekt zu erzielen ist. Um das Einschneiden des Zahnfadens in das Zahnfleisch des Benutzers zu vermeiden oder diese Gefahr zumindest zu verringern, müßte der Zahnfaden mit einem größeren Durchmesser ausgebildet werden, wodurch der Zahnfaden übermäßig dick wird und nicht mehr in alle Interdentalräume eingeführt werden kann.

Der Erfindung liegt die Aufgabe zugrunde, ein Reinigungselement insbesondere zur Reinigung von Zähnen der genannten Art zu schaffen, das eine zuverlässige, schonende Reinigung der Zahnflächen gewährleistet. Darüber hinaus soll ein Verfahren geschaffen werden, mit dem sich das Reinigungselement schnell und kostengünstig herstellen läßt.

Hinsichtlich des Reinigungselementes wird die genannte Aufgabe dadurch gelöst, daß die Strukturelemente aus einem elastomeren Kunststoff bestehen. Auf diese Weise ist ein Reinigungselement geschaffen, mit dem auf der Zahnoberfläche eine Bürstwirkung und somit ein hoher Reinigungseffekt erzielt wird. Aufgrund des nachgiebigen, flexiblen Materials ist dabei eine schonende Bearbeitung gegeben. Darüber hinaus ermöglicht die Flexibilität des Kunststoff-Materials, daß das Reinigungselement auch in enge Zwischenräume eindringen kann, ohne daß die Gefahr des Einschneidens in das Zahnfleisch gegeben ist. Der fadenartige Endlosträger kann dabei in bekannter Weise aus Garn, Zwirn, Draht, einem Multifil, einem Monofil, einem Band, einem Docht oder ähnlichem bestehen.

Wenn die Materialien des Endlosträgers und der Strukturelemente entsprechend gewählt werden, können die Strukturelemente direkt auf den Endlosträger aufgebracht und auf diesem befestigt werden. In bevorzugter Ausgestaltung der Erfindung ist jedoch vorgesehen, daß auf den Endlosträger eine Vielzahl voneinander beabstandeter Trägerkörper aus dem elastomeren Kunststoff aufgebracht sind, die auf ihrer Außenoberfläche vorzugsweise einstückig die Strukturelemente tragen. Der Trägerkörper umhüllt den Endlosträger abschnittsweise und dient gleichzeitig als Basis und Befestigung der vorstehenden Strukturelemente, die sich in verschiedene Richtungen radial nach außen erstrecken. Dabei lassen sich der Trägerkörper und die Strukturelemente in einfacher Weise herstellen, wenn sie auf den Endlosträger in einem Ein- oder Mehr-Komponenten-Spritzgießverfahren aufgespritzt werden.

Wenn der Endlosträger eine gewisse Querelastizität aufweist, wie es insbesondere bei einem Multifil oder einem Garn der Fall ist, wird der Endlosträger durch den hohen Druck, mit dem der elastomere Kunststoff aufgespritzt wird, in Querrichtung stark zusammengepreßt. Hierdurch wird eine vorteilhafte Verringerung des Durchmessers des Endlosträgers im Bereich des aufgespritzten Kunststoffes erreicht, der dadurch zusätzlich in Längsrichtung des Endlosträgers gegen axiales Verschieben gesichert ist. Gegebenenfalls kann vor dem Aufspritzen des Kunststoff-Materials auf den Endlosträger auf dessen Oberfläche ein Haftvermittler aufgetragen werden.

Die zwischen den in Längsrichtung des Endlosträgers beabstandeten Trägerkörpern liegenden Abschnitte des Endlosträgers können unbehandelt bleiben, es ist jedoch auch möglich, die zwischen benachbarten Trägerkörpern liegenden Abschnitte mittels des elastomeren Kunststoffes zu umhüllen, wobei in diesen Bereichen dann keine Strukturelemente angeordnet sind.

Die Strukturelemente sind vorzugsweise von radial vorstehenden Noppen und/oder Borsten und/oder Rippen gebildet. Zusätzlich oder alternativ dazu kann vorgesehen sein, daß der Trägerkörper auf seiner Außenoberfläche wellenund/oder rillenförmig ausgebildet ist. Darüber hinaus ist es möglich, auf dem Trägerkörper eine schraubenartig umlaufende Rippe vorzusehen.

In Weiterbildung der Erfindung kann vorgesehen sein, daß der Trägerkörper einen runden, ovalen oder polygonförmigen Querschnitt besitzt, um durch die Querschnittsgestaltung die Reinigungswirkung zu erhöhen. Alternativ kann er auch bandartig flach ausgebildet sein.

Ein wesentlicher Punkt des erfindungsgemäßen Reinigungselementes besteht darin, daß die Strukturelemente und gegebenenfalls auch der Trägerkörper in Querrrichtung des Endlosträgers elastisch verformbar sind. Diese elastische Verformbarkeit kann einerseits durch die Eigenelastizität des elastomeren Kunststoff-Materials erreicht werden, in Weiterbildung der Erfindung kann jedoch auch vorgesehen sein, daß im Kunststoff-Material des Trägerkörpers und/oder der Strukturelemente Hohlräume ausgebildet sind, die die radiale Verformbarkeit verbessern. Die Hohlräume können offen oder geschlossen sein und erleichtern das Zusammenpressen der Strukturelemente beim Einführen des Reinigungsgerätes in schmale Dentalräume. Die Hohlräume können darüber hinaus auch eine Zellstruktur besitzen, indem beispielsweise das elastomere Kunststoff-Material geschäumt wird. Beim Schäumen kann eine geschlossene oder auch eine durchlässige Oberflächenstruktur entstehen.

Die Hohlräume können darüber hinaus zur Aufnahme von medizinischem Pflegemittel und/oder einem Gleitmittel und/oder einem Abrasivmittel verwendet werden. Bei den Pflegemitteln kann es sich beispielsweise um Zahncreme handeln. Wenn die Hohlräume geschlossen ausgebildet sind, können sie mit feinen Hohlnadeln gefüllt werden, wobei die Einstichlöcher aufgrund der Eigenelastizität des Materials sich nach dem Füllen schließen, andererseits jedoch bei Ausübung eines Drucks die eingespritzten Medien freigeben.

Zusätzlich oder alternativ dazu kann vorgesehen sein, daß auf die Außenseite des Trägerkörpers und/oder der Strukturelemente ein medizinisches Pflegemittel und/oder ein Gleitmittel und/oder ein Abrasivmittel aufgebracht ist. Entsprechende Mittel können auch in den fadenartigen Endlosträger eingebracht sein.

In einer bevorzugten Ausgestaltung der Erfindung ist vorgesehen, daß die Strukturelemente an ihrem freien Ende abgerundet sind, um Verletzungen der Zähne und des Zahnfleisch zu vermeiden, wie sie bei der bekannten Beflockung mit geschnittenen Feinstborsten entstehen können, da diese an ihren Enden relativ scharfe Kanten besitzen. Darüber hinaus erleichtert die Abrundung der Strukturelemente deren Umlegen beim Hindurchführen durch enge Zwischenräume.

In einer ersten Ausgestaltung kann vorgesehen sein, daß das Reinigungselement auf dem Endlosträger eine Vielzahl gleichartiger Strukturelemente und Trägerkörper besitzt. Alternativ ist es jedoch auch möglich, auf dem Endlosträger Strukturelemente und Trägerkörper aus unterschiedlichen Materialien und mit unterschiedlicher Formgebung anzuordnen. Beispielsweise können auf einem Trägerkörper Strukturelemente vorgesehen werden, die mit Pflegemitteln, Medizin oder Abrasivstoffen versehen sind, während der benachbarte Trägerkörper Strukturelemente ohne diese Zugaben aufweist. Gegebenenfalls können die Unterschiede durch Verwendung entsprechender Farben dem Benutzer signalisiert werden.

Bei Verwendung des Reinigungselementes als Zahnfaden zur Reinigung der Zähne muß der Benutzer einen Abschnitt des Endlosträgers abtrennen und an dessen Enden mit seinen Händen erfassen. Dies kann erleichtert werden, wenn auf den Endlosträger in vorbestimmten Abständen Haltemittel aufgebracht sind, die aus einem Kunststoff-Material bestehen und insbesondere aufgespritzt werden. Der Benutzer muß dann den Endlosträger lediglich hinter dem Haltemittel abtrennen und kann dann den abgetrennten Abschnitt an den Haltemitteln erfassen und somit die Zähne in einfacher Weise reinigen. Bei den Halteelementen kann es sich um angespritzte Verdickungen oder Platten handeln, die ein Ergreifen des abgetrennten Abschnitts des Endlosträgers ermöglichen.

Darüber hinaus kann vorgesehen sein, auf den Endlosträger in vorbestimmten Abständen Orientierungselemente aufzubringen und insbesondere aufzuspritzen, die sowohl bei der Herstellung des Reinigungselementes als auch bei dessen Gebrauch als Anzeige dienen, wo der Endlosträger durchtrennt werden soll.

In bestimmten Anwendungsfällen kann es sinnvoll oder wünschenswert sein, den abgetrennten Abschnitt des Endlosträgers zu einem umlaufenden Band zusammenführen. Dies kann erreicht werden, wenn auf den Endlosträger Verbindungselemente aufgespritzt werden, die nach Abtrennen eines Abschnitts miteinander verbunden werden können, so daß ein umlaufender Ring gebildet ist.

Ein Zahnfaden ist in der Regel in einem Gehäuse untergebracht, aus dem er von einem Benutzer um ein gewünschtes Maß herausgezogen wird. Am Gehäuse ist eine Schneidvorrichtung montiert, mit der der Benutzer den herausgezogenen Abschnitt des Zahnfadens abschneiden kann. Wenn die Schneidvorrichtung ein bewegliches Messer ist, kann der Zahnfaden in vorbestimmten Abständen aufgespritzte Auslösemittel aufweisen, die das Messer auslösen, sobald sie an einem entsprechenden Anschlag vorbeilaufen.

Bisher ist als Anwendungsgebiet immer von der Verwendung des Reinigungselementes als Zahnfaden ausgegangen worden. Eine weitere vorteilhafte Anwendung ist jedoch gegeben, wenn der Endlosträger in kurze Abschnitte unterteilt und diese Kurzschnitte dann als Borste in einer Borstenware, insbesondere einer Zahnbürste in herkömmlicher Weise verwendet werden. Dabei können die Strukturelemente und/oder die Trägerkölrper entweder aus einem harten oder aus einem elastomeren Kunststoff bestehen.

Hinsichtlich des Verfahrens wird die oben genannte Aufgabe dadurch gelöst, daß zur Bildung der Strukturelemente ein Kunststoff, insbesondere ein elastomerer Kunststoff, auf den fadenartigen Endlosträger aufgespritzt wird. Vorzugsweise wird dabei gleichzeitig ein den Endlosträger umhüllender Trägerkörper aufgespritzt, der durch den Aufspritzdruck und die sich dabei ergebende radial nach innen gerichtete Verformung des Endlosträgers auf diesem axial gesichert ist. Bei Verwendung eines Zwei- oder Mehr-Komponenten-Verfahrens können auf einen Endlosträger auch Strukturelemente und/oder Trägerkörper unterschiedlichen Materials aufgebracht werden. Weitere Verfahrensmerkmale ergeben sich aus der vorstehenden Beschreibung des Reinigungselementes.

Weitere Einzelheiten und Merkmale der Erfindung sind aus der folgenden Beschreibung von Ausführungsbeispielen unter Bezugnahme auf die beigefügte Zeichnung ersichtlich. Es zeigen:
- Figur 1: eine ausschnittsweise Seitenansicht eines Reinigungselementes gemäß einer ersten Ausführungsform,
- Figur 2: eine Abwandlung des Reinigungselementes gemäß Figur 1,
- Figur 3: eine Seitenansicht eines Reinigungselementes in einer weiteren Ausführungsform,
- Figur 4: eine alternative Ausgestaltung des Reinigungselementes und
- Figur 5: ein Reinigungselement mit aufgespritzten Haltemitteln.

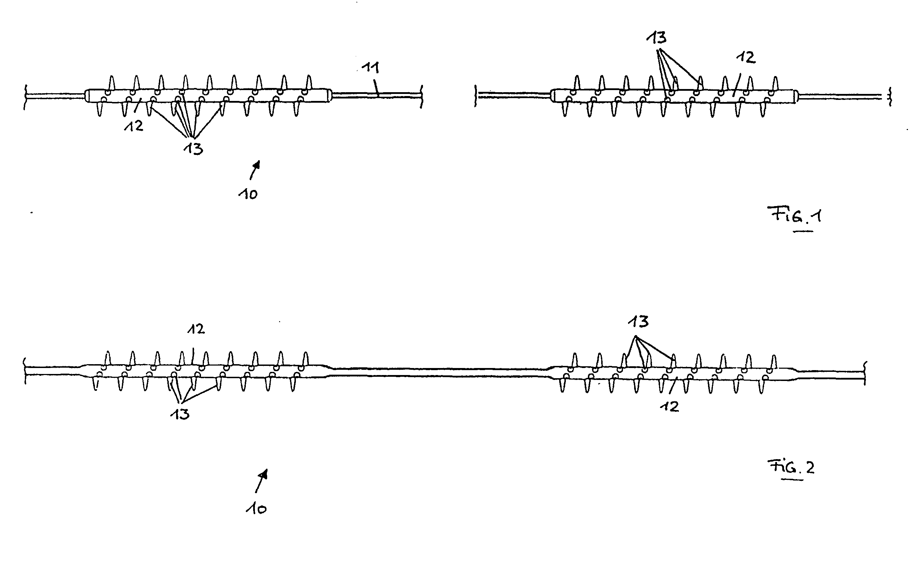

Gemäß Figur 1 weist ein erfindungsgemäßes Reinigungselement 10, das insbesondere zur Reinigung von Zähnen verwendet wird, einen flexiblen, fadenartigen Endlosträger 11 auf, bei dem es sich um ein Monofil oder ein Multifil handeln kann.

In voneinander beabstandeten Abschnitten des Endlosträgers 11 ist auf diesen jeweils ein umhüllender, rohrförmiger Trägerkörper 12 aufgespritzt, der auf seiner Außenoberfläche eine Vielzahl von in verschiedene Richtungen radial nach außen vorstehenden Strukturelementen 13 in Form von kegeligen Vorsprüngen besitzt, die an ihrem äußeren freien Ende abgerundet sind. Der Trägerkörper 12 und die Strukturelemente 13 bestehen aus einem elastomeren Kunststoff und sind einstückig ausgebildet.

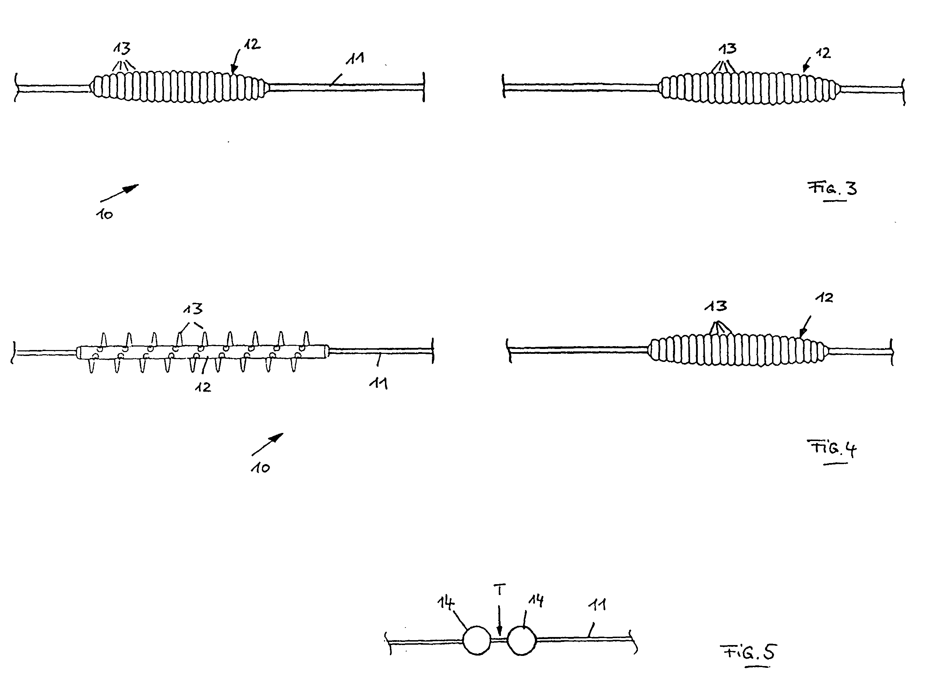

Bei der in Figur 1 dargestellten Ausführungsvariante sind die zwischen den benachbarten Trägerkörpern 12 liegenden Abschnitte des fadenartigen Endlosträgers 11 unummantelt. In Abwandlung davon ist bei der Ausführung gemäß Figur 2 vorgesehen, diese Zwischenabschnitte ebenfalls mit dem elastomeren Kunststoff, der die Trägerkörper 12 und die Strukturelemente 13 bildet, zu umhüllen, wobei in diesen Abschnitten der Außendurchmesser geringer als der des Trägerkörpers 12 ist.

In Figur 3 ist ein Reinigungselement gezeigt, dessen Trägerkörper 12 auf seiner Außenseite vorstehende, in Querrichtung umlaufende Rippen 13 besitzt, die die Strukturelemente bilden. Darüber hinaus nimmt der Durchmesser des Trägerkörpers von seinen Enden zu seiner Mitte hin um ein geringes Maß zu, wodurch die Reinigungswirkung verbessert wird.

Figur 4 zeigt ein Ausführungsbeispiel, bei dem auf dem fadenartigen Endlosträger 11 unterschiedliche Trägerkörper 12 mit unterschiedlichen Strukturelementen 13 angeordnet sind.

Wenn das Reinigungselement als Zahnfaden im herkömmlichen Sinne verwendet wird, muß der Benutzer einen Abschnitt von dem fadenartigen Endlosträger abschneiden, diesen ergreifen und durch die Interdentalräume ziehen. Um das Halten des Abschnittes zu erleichtern, sind bei dem in Figur 5 dargestellten Reinigungselement bereits in vorbestimmten Abständen jeweils zwei kugelartige Haltemittel auf den Endlosträger 11 aufgespritzt, die zwischen sich einen geringen Abstand aufweisen. Der Benutzer trennt den fadenartigen Endlosträger 11 zwischen den beiden Haltemitteln 14, wie durch den Pfeil T angedeutet ist, und erhält damit einen Abschnitt des Reinigungselementes, der an seinen Enden jeweils ein Haltemittel 14 besitzt.

## Patentansprüche

1. Verfahren zur Herstellung eines Reinigungselementes insbesondere zur Reinigung von Zähnen, mit einem flexiblen, fadenartigen Endlosträger (11), auf den zumindest abschnittsweise radial vorstehende Strukturelemente (13) aus Kunststoff aufgebracht sind, **dadurch gekennzeichnet, daß** der Kunststoff zur Ausbildung der Strukturelemente auf den Endlosträger aufgespritzt wird.

2. Verfahren nach Anspruch 1, **dadurch gekennzeichnet, daß** der Kunststoff ein elastomerer Kunststoff ist.

3. Verfahren nach Anspruch 1 oder 2, **dadurch gekennzeichnet, daß** zusammen mit den Strukturelementen (13) auf den Endlosträger (11) eine Vielzahl voneinander beabstandeter Trägerkörper (12) aus dem gleichen Kunststoff-Material aufgespritzt wird, die auf ihrer Außenoberfläche die Strukturelemente (13) tragen.

4. Verfahren nach einem der Ansprüche 1 bis 3, **dadurch gekennzeichnet, daß** im Kunststoff-Material des Trägerkörpers (12) und/oder der Strukturelemente (13) Hohlräume ausgebildet werden.

5. Verfahren nach Anspruch 4, **dadurch gekennzeichnet, daß** die Hohlräume zumindest teilweise mit einem medizinischen Pflegemittel und/oder einem Gleitmittel und/oder einem Abrasivmittel gefüllt werden.

6. Verfahren nach Anspruch 5, **dadurch gekennzeichnet, daß** die Hohlräume mittels einer Hohlnadel gefüllt werden.

7. Verfahren nach einem der Ansprüche 1 bis 6, **dadurch gekennzeichnet, daß** der Endlosträger (11) aus Garn, Zwirn, Draht, einem Multifil, einem Monofil, einem Band oder einem Docht besteht.

8. Verfahren nach einem der Ansprüche 1 bis 7, **dadurch gekennzeichnet, daß** die Strukturelemente (13) von radial vorstehenden Noppen und/oder Borsten und/oder Rippen gebildet sind.

9. Verfahren nach einem der Ansprüche 3 bis 8, **dadurch gekennzeichnet, daß** die Trägerkörper (12) den Endlosträger (11) umhüllen.

10. Verfahren nach einem der Ansprüche 3 bis 9, **dadurch gekennzeichnet, daß** die zwischen benachbarten Trägerkörpern (12) liegenden Abschnitte des Endlosträgers (11) mittels des Kunststoffs umhüllt werden.

11. Verfahren nach einem der Ansprüche 3 bis 10, **dadurch gekennzeichnet, daß** der Trägerkörper (12) auf seiner Außenoberfläche wellen- und/oder rillenförmig ausgebildet ist.

12. Verfahren nach einem der Ansprüche 3 bis 11, **dadurch gekennzeichnet, daß** der Trägerkörper einen runden, ovalen oder polygonförmigen Querschnitt besitzt.

13. Verfahren nach einem der Ansprüche 1 bis 12, **dadurch gekennzeichnet, daß** auf die Außenseite des Trägerkörpers (12) und/oder der Strukturelemente (13) ein medizinisches Pflegemittel und/oder ein Gleitmittel und/oder ein Abrasivmittel aufgebracht wird.

14. Verfahren nach einem der Ansprüche 1 bis 13, **dadurch gekennzeichnet, daß** die Strukturelemente (13) an ihrem freien Ende abgerundet sind.

15. Verfahren nach einem der Ansprüche 1 bis 14, **dadurch gekennzeichnet, daß** auf dem Endlosträger (11) Trägerkörper unterschiedlicher Oberflächengestaltung angeordnet werden.

16. Verfahren nach einem der Ansprüche 1 bis 15, **dadurch gekennzeichnet, daß** auf dem Endlosträger (11) Trägerkörper aus unterschiedlichen Kunststoff-Materialien angeordnet sind.

17. Verfahren nach einem der Ansprüche 1 bis 16, **dadurch gekennzeichnet, daß** auf den Endlosträger in vorbestimmen Abständen Haltemittel (14) aufgebracht werden.

18. Verfahren nach einem der Ansprüche 1 bis 17, **dadurch gekennzeichnet, daß** auf den Endlosträger in vorbestimmten Abständen Verbindungselemente aufgebracht sind.

19. Verfahren nach einem der Ansprüche 1 bis 18, **dadurch gekennzeichnet, daß** auf den Endlosträger in vorbestimmten Abständen Auslösemittel für eine Schneideinrichtung aufgebracht sind.

20. Verwendung eines kurzen Abschnittes eines nach einem der Ansprüche 1 bis 19 hergestellten Reinigungselementes als Borste in einer Borstenware, insbesondere Zahnbürste.

## Claims

1. Method of manufacturing a cleaning element in particular for cleaning teeth, with a flexible thread-like endless carrier (11) onto which, at least at sections, radially projecting structured plastic elements (13) are disposed, **characterized in that** the plastic is injection molded onto the endless carrier to form the structured elements.

2. Method according to claim 1, **characterized in that** the plastic is an elastomeric plastic.

3. Method according to claim 1 or 2, **characterized in that** a plurality of support bodies (12), spaced apart from one another and made from the same plastic, are injection molded, together with the structured elements (13), onto the endless carrier (11) and bear the structured elements on their outer surface.

4. Method according to any one of the claims 1 through 3, **characterized in that** cavities are formed in the plastic of the support body (12) and/or the structured elements (13).

5. Method of claim 4, **characterized in that** the cavities are, at least partly, filled with a medical care product and/or a lubricating agent and/or an abrasive agent.

6. Method of claim 5, **characterized in that** the cavities are filled using a hollow needle.

7. Method according to any one of the claims 1 through 6, **characterized in that** the endless carrier (11) consists of thread, twisted thread, wire, a multifile, a monofile, a tape or a wick.

8. Method according to any one of the claims 1 through 7, **characterized in that** the structured elements (13) are radially projecting nubs and/or bristles and/or ribs.

9. Method according to any one of the claims 3 through 8, **characterized in that** the support bodies (12) enclose the endless carrier (11).

10. Method according to any one of the claims 3 through 9, **characterized in that** the sections of the endless carrier (11) disposed between neighboring support bodies (12) are enclosed by the plastic.

11. Method according to any one of the claims 3 through 10, **characterized in that** the outer surface of the support body (12) is corrugated and/or fluted.

12. Method according to any one of the claims 3 through 11, **characterized in that** the support body has a round, oval or polygonal cross-sectional shape.

13. Method according to any one of the claims 1 through 12, **characterized in that** a medical care product and/or a lubricating agent and/or an abrasive agent is disposed on the outside of the support body and/or the structured elements (13).

14. Method according to any one of the claims 1 through 13, **characterized in that** the structured elements (13) are rounded at their free ends.

15. Method according to any one of the claims 1 through 14, **characterized in that** the endless carrier (11) comprises support bodies having differing surface configurations.

16. Method according to any one of the claims 1 through 15, **characterized in that** the endless carrier (11) has support bodies of differing plastics.

17. Method according to any one of the claims 1 through 16, **characterized in that** holding means (14) are disposed on the endless carrier at defined separations.

18. Method according to any one of the claims 1 through 17, **characterized in that** connecting elements are disposed on the endless carrier at defined distances.

19. Method according to any one of the claims 1 through 18, **characterized in that** triggering means for a cutting device are provided on the endless carrier at defined distances.

20. Use of a short section of a cleaning element manufactured according to any one of claims 1 through 19, as a bristle in a brush, in particular a tooth brush.

## Revendications

1. Procédé de fabrication d'un élément de nettoyage, en particulier pour le nettoyage des dents, comprenant un support sans fin (11) flexible et filiforme, sur lequel sont appliqués au moins par zones en saillie radiale des éléments structuraux (13) en matière synthétique, **caractérisé en ce que** la matière synthétique destinée à former les éléments structuraux est appliquée au pistolet sur le support sans fin.

2. Procédé selon la revendication 1, **caractérisé en ce que** la matière synthétique est une matière synthétique élastomère.

3. Procédé selon la revendication 1 ou 2, **caractérisé en ce que** l'on applique au pistolet sur le support sans fin (11) avec les éléments structuraux (13) une pluralité de corps-supports (12) à distance les uns des autres réalisés dans la même matière synthétique, portant sur leur surface extérieure les éléments structuraux (13).

4. Procédé selon l'une quelconque des revendications 1 à 3, **caractérisé en ce que** des espaces creux sont formés dans la matière synthétique du corps-support (12) et/ou des éléments structuraux (13).

5. Procédé selon la revendication 4, **caractérisé en ce que** les espaces creux sont remplis au moins partiellement d'un produit de soin médical et/ou d'un agent lubrifiant et/ou d'un produit abrasif.

6. Procédé selon la revendication 5, **caractérisé en ce que** les espaces creux sont remplis au moyen d'une canule.

7. Procédé selon l'une quelconque des revendications 1 à 6, **caractérisé en ce que** le support sans fin (11) est un filé, un retors, une torsion, un multifil, un monofil, une bande ou une mèche.

8. Procédé selon l'une quelconque des revendications 1 à 7, **caractérisé en ce que** les éléments structuraux (13) sont constitués par des nopes et/ou des poils et/ou des nervures.

9. Procédé selon l'une quelconque des revendications 3 à 8, **caractérisé en ce que** les corps-supports (12) entourent le support sans fin (11).

10. Procédé selon l'une quelconque des revendications 3 à 9, **caractérisé en ce que** les zones du support sans fin (11) situées entre des corps-supports (12) contigus sont enveloppées par la matière synthétique.

11. Procédé selon l'une quelconque des revendications 3 à 10, **caractérisé en ce que** le corps-support (12) présente sur sa surface extérieure des conformations en ondes et/ou en rainures.

12. Procédé selon l'une quelconque des revendications 3 à 11, **caractérisé en ce que** le corps-support présente une section ronde, ovale ou polygonale.

13. Procédé selon l'une quelconque des revendications 1 à 12, **caractérisé en ce que** l'on applique sur la face extérieure du corps-support (12) et/ou des éléments structuraux (13) un produit de soin médical et/ou un agent lubrifiant et/ou un produit abrasif.

14. Procédé selon l'une quelconque des revendications 1 à 13, **caractérisé en ce que** les éléments structuraux (13) sont arrondis à leur extrémité libre.

15. Procédé selon l'une quelconque des revendications 1 à 14, **caractérisé en ce que** l'on dispose sur le support sans fin (11) des corps-supports présentant des structures de surface différentes.

16. Procédé selon l'une quelconque des revendications 1 à 15, **caractérisé en ce que** l'on dispose sur le support sans fin (11) des corps-supports réalisés dans des matières synthétiques différentes.

17. Procédé selon l'une quelconque des revendications 1 à 16, **caractérisé en ce que** l'on applique sur le support sans fin, à des intervalles prédéfinis, des moyens de maintien (14).

18. Procédé selon l'une quelconque des revendications 1 à 17, **caractérisé en ce que** l'on applique sur le support sans fin, à des intervalles prédéfinis, des éléments de liaison.

19. Procédé selon l'une quelconque des revendications 1 à 18, **caractérisé en ce que** l'on applique sur le support sans fin, à des intervalles prédéfinis, des moyens de déclenchement pour un dispositif de coupe.

20. Utilisation d'une courte portion d'un élément de nettoyage fabriqué selon l'une des revendications 1 à 19 comme poil dans un article de brosserie, en particulier une brosse à dents.
